# EUROPEAN PATENT APPLICATION

(11) **EP 4 609 933 A1**
(43) Date of publication of application: **03.09.2025**
(21) Application number: 24160672.2
(22) Date of filing: 29.02.2024
(51) Int. Cl.: B01D 39/16, B01D 39/18, B01D 39/20, C08F 220/10, C09D 133/04, D06M 15/00

(54) **NON-FLUORINATED NONWOVEN AND PAPER MEDIA HAVING HIGH HYDROPHOBICITY AND PROCESSES FOR MAKING THE SAMES FOR MAKING THE SAME**

(71) Applicant: Ahlstrom Oyj, 02150 Espoo (FI)
(72) Inventor: Soikkeli, Outi, Tampere (FI); Billod, Elise, Saint-Egrêve (FR); Heino, Helinä, Tampere (FI); Pigeot-Remy, Stéphanie, Lyon (FR); Prost, Claire, Lyon (FR); Lions, Bruno, Brignoud (FR); Merlet, Samuel, Vaulnaveys le haut (FR)
(74) Representative: Pfenning, Meinig & Partner mbB

(57) **Abstract**

A fluorine-free chemical treatment applicable to nonwoven media to provide high hydrophobicity and glue repellency without impacting product porosity/permeability. The fluorine-free chemical treatment incudes application of a water repellent including an acrylate copolymer optionally containing silicon functionalities, and/or optionally admixed with a polyurethane resin compound. The acrylate copolymer is used in combination with a non-fluorinated hydrophobic binder including a styrene moiety. Also disclosed are non-woven media including the acrylate copolymer containing silicon functionalities, and/or admixed with a polyurethane resin compound.

## Description

### BACKGROUND

The present disclosure generally relates to non-wovens for filtration and fibrous mat applications and processes for making the same, and more particularly, to non-wovens having high hydrophobicity made with a non-fluorinated water repellent and a non-fluorinated hydrophobic polymeric binder.

Non-wovens for fibrous mat and/or filtration applications are oftentimes formulated to have high hydrophobicity. For example, gypsum board for use in humid/wet environments such as bathrooms generally include a gypsum core (e.g., a hydratable calcium sulfate) sandwiched between one or more fibrous non-woven mat layers having high hydrophobicity. In filtration applications, hydrophobic filters are typically used in gas filtration processes. The hydrophobicity of the filter allows nonpolar fluids, like air, to interact more efficiently and prevent liquids, like water, from passing through the filter. Hydrophobic filters are commonly used in gas vent functions within medical devices. These filters allow you to vent out air or other gases while retaining the water-based fluids that will be used to aid in the treatment of patients. In addition, some filtration media are often configured as canister-type pleated filters that include end caps adhesively secured to the filtration media for structural and mechanical rigidity. In these types of applications, it is also desirable that the non-woven is configured to provide increased glue repellency to prevent the glue from permeating into the filtration media itself during filter making process, which results in the clogging of media pores proximate to the end caps.

To provide the desired amount of hydrophobicity for both non-woven fibrous mat and filtration applications, the prior art non-wovens are typically treated with per- and polyfluoroalkyl substances (PFAS or PFASs), which are a group of synthetic organofluorine chemical compounds that have multiple fluorine atoms attached to an alkyl chain. For example, C6-fluorinated chemistry is often utilized for providing the high hydrophobicity for filtration media applications without deleteriously affecting porosity. Other PFAS substances such as perfluoropolyethers (also referred to as C2- fluorinated chemistry or PFPE) or polytetrafluoroethylene (also called PTFE or Teflon) are also known to provide non-woven and paper media with chemical barrier properties. However, PFAS materials are relatively expensive chemicals and are believed to have environmental and regulatory issues.

Other approaches to provide non-wovens with high hydrophobicity include the application of alginates and modified starches onto the non-woven, which has also recently been introduced for grease resistant-related applications in the food packaging industry. For example, alginates are excellent film formers and are often used with other film formers such as starch and/or polyvinyl alcohol for improved barrier resistance. The film formers are generally applied at the surface of a low permeability non-woven paper as a viscous coating. This type of approach is an effective way to make paper media grease resistant when the paper structure is closed, i.e., substantially non-porous. However, this approach is not as effective when the porosity of the paper and/or nonwoven media needs to be maintained such as for filtration applications. Moreover, the application of alginates and/or starches generally requires more energy than its PFAS counterparts and makes the non-woven more difficult to dry and dewater, which can cause production delays. To overcome the loss in production, investments in capital equipment may be needed to properly refine and dry the non-woven, which is not desirable.

### BRIEF SUMMARY

Disclosed herein are non-wovens and processes for fabricating the non-wovens. In one or more embodiments, the non-woven includes at least one treated fiber layer, wherein the at least one treated fiber layer comprises synthetic fibers, glass fibers, cellulose fibers, and mixtures thereof; a non-fluorinated hydrophobic binder comprising a polymer containing at least a styrene moiety; and a non-fluorinated water repellant comprising a polymer with a repeating unit derived from (meth)acrylate ester monomer, wherein the ester moiety has 7 to 40 carbon atoms and more preferably 12 to 24 carbon atoms.

A process for fabricating a non-woven includes subsequent to dewatering a homogenous fiber slurry and drying to form a substrate, applying a non-fluorinated hydrophobic binder to the substrate and impregnating the substrate with a non-fluorinated water repellent comprising a polymer with a repeating unit derived from (meth)acrylate ester monomer, wherein the ester moiety has 7 to 40 carbon atoms and more preferably 12 to 24 carbon atoms.

These and other features and advantages of the embodiments of the invention will be more fully understood from the following detailed description of the invention. It is noted that the scope of the claims is defined by the recitations therein and not by the specific discussion of features and advantages set forth in the present description.

### DETAILED DESCRIPTION

Disclosed herein are non-wovens including one or more non-woven fiber layers formed of a blend of synthetic, cellulose and/or glass fibers having high hydrophobicity including a non-fluorinated water repellant and a non-fluorinated hydrophobic polymeric binder applied thereon. The non-wovens can be configured for use in fibrous mat applications or filtration applications, wherein high hydrophobicity is desired. At least one of the non-woven fiber layers in the media is treated with the non-fluorinated hydrophobic binder and the non-fluorinated water repellant, which provides a marked increase in hydrophobicity comparable to non-wovens made with fluorinated materials, thereby overcoming many of the problems associated with the application of these materials. The treatment can be sequentially or simultaneously applied during the process for fabricating the non-woven fibrous mat or the non-woven filtration media.

For the purposes of the description hereinafter, the terms "upper", "lower", "top", "bottom", "left," and "right," and derivatives thereof shall relate to the described structures, as they are oriented in the drawing figures. The same numbers in the various figures can refer to the same structural component or part thereof. Additionally, the articles "a" and "an" preceding an element or component are intended to be nonrestrictive regarding the number of instances (i.e., occurrences) of the element or component. Therefore, "a" or "an" should be read to include one or at least one, and the singular word form of the element or component also includes the plural unless the number is obviously meant to be singular.

Spatially relative terms, e.g., "beneath," "below," "lower," "above," "upper," and the like, can be used herein for ease of description to describe one element or feature's relationship to another element(s) or feature(s) as illustrated in the figures.

The following definitions and abbreviations are to be used for the interpretation of the claims and the specification. As used herein, the terms "comprises," "comprising," "includes," "including," "has," "having," "contains" or "containing," or any other variation thereof, are intended to cover a non-exclusive inclusion. For example, a composition, a mixture, process, method, article, or apparatus that comprises a list of elements is not necessarily limited to only those elements but can include other elements not expressly listed or inherent to such composition, mixture, process, method, article, or apparatus.

As used herein, the term "about" modifying the quantity of an ingredient, component, or reactant of the invention employed refers to variation in the numerical quantity that can occur, for example, through typical measuring and liquid handling procedures used for making concentrates or solutions. Furthermore, variation can occur from error in measuring procedures, differences in the manufacture, source, or purity of the ingredients employed to make the compositions or carry out the methods, and the like.

The term "fiber" is a fibrous or filamentary structure having a high aspect ratio of length to diameter.

"Fibrous" means a material that is composed predominantly of fiber and/or staple fiber.

The term "non-woven" means a collection of fibers and/or staple fibers in a web or mat which are randomly interlocked, entangled and/or bound to one another so as to form a self-supporting structural element.

The term "synthetic fiber" and/or "man-made fiber" refers to chemically produced fiber made from fiber-forming substances including polymers synthesized from chemical compounds and modified or transformed natural polymer. Such fibers may be produced by conventional melt-spinning, solution- or solvent-spinning and like filament production techniques. A "cellulosic fiber" is a fiber composed of or derived from cellulose.

In the present disclosure, non-limiting examples of suitable synthetic polymers that may be included in synthetic fibers include acrylics, poly(vinyl alcohol), poly(ester)s (e.g., poly(ethylene terephthalate)), poly(acrylonitrile), poly(olefin)s (e.g., poly (ethylene), poly(propylene)), poly(vinylidene difluoride), poly(ether sulfone), poly(vinyl chloride), poly(amide)s, poly(imide)s, aramids (e.g., meta-aramids, para-aramids), poly (etherimide), poly(ether ether ketone), liquid crystal polymers (e.g., poly(p-phenylene-2,6- benzobisoxazole; poly(ester)-based liquid crystal polymers, such as fibers produced by the polycondensation of 4-hydroxybenzoic acid and 6-hydroxynaphthalene-2-carboxylic acid), regenerated cellulose (e.g., lyocell, rayon), celluloid, cellulose acetate, carboxymethylcellulose copolymers of the foregoing, and blends of the foregoing.

The microglass fibers may comprise microglass fibers drawn from bushing tips and further subjected to flame blowing or rotary spinning processes. In some cases, microglass fibers may be made using a remelting process. The microglass fibers may be microglass fibers for which alkali metal oxides (e.g., sodium oxides, magnesium oxides) make up 10-20 wt% of the fibers. Such fibers may have relatively lower melting and processing temperatures. Nonlimiting examples of microglass fibers include B glass fibers, E glass fibers, S glass fibers, M glass fibers according to Man Made Vitreous Fibers by Nomenclature Committee of TIMA Inc. March 1993, Page 45, C glass fibers (e.g., Lauscha C glass fibers, JM 253 C glass fibers), and non-persistent glass fibers (e.g., fibers that are configured to dissolve completely in the fluid present in human lungs in less than or equal to 40 days, such as Johns Manville 481 fibers). It should be understood that microglass fibers present in a non-woven fiber web may comprise one or more of the types of microglass fibers described here.

A "cellulosic fiber" is a fiber composed of or derived from cellulose. The cellulosic fibers can be selected from the group of natural or regenerated cellulose fibers, such as cellulose, lyocell, viscose and any other derivatives of cellulosic fibers. The natural cellulose fibers may be wood (e.g., cedar) fibers, such as softwood fibers and/or hardwood fibers. Other examples of natural cellulose fibers are also possible (e.g., nano-cellulose fibers, such as nanofibrillated fibers and/or fibrous cellulose nanocrystals; micro fibrillated cellulose). It is also possible for a fiber web to comprise wool.

Exemplary softwood fibers include fibers obtained from mercerized southern pine ("mercerized southern pine fibers or HPZ fibers"), northern bleached softwood kraft (e.g., fibers obtained from Robur Flash ("Robur Flash fibers")), southern bleached softwood kraft (e.g., fibers obtained from Brunswick pine ("Brunswick pine fibers")), and/or chemically treated mechanical pulps ("CTMP fibers"). For example, HPZ fibers can be obtained from Buckeye Technologies, Inc., Memphis, TN; Robur Flash fibers can be obtained from Rottneros AB, Stockholm, Sweden; and Brunswick pine fibers can be obtained from Georgia- Pacific, Atlanta, GA.

Exemplary hardwood fibers include fibers obtained from Eucalyptus ("Eucalyptus fibers"). Eucalyptus fibers are commercially available from, e.g., (1) Suzano Group, Suzano, Brazil ("Suzano fibers"), (2) Group Portucel Soporcel, Cacia, Portugal ("Cacia fibers"), (3) Tembec, Inc., Temiscaming, QC, Canada ("Tarascon fibers"), (4) Kartonimex Intercell, Duesseldorf, Germany, ("Acacia fibers"), (5) Mead-Westvaco, Stamford, CT ("Westvaco fibers"), and (6) Georgia-Pacific, Atlanta, GA ("Leaf River fibers").

It will also be understood that when an element, such as a layer, region, or substrate is referred to as being "on" or "over" another element, it can be directly on the other element or intervening elements can also be present. In contrast, when an element is referred to as being "directly on" or "directly over" another element, there are no intervening elements present, and the element is in contact with another element.

The non-fluorinated hydrophobic binder is generally defined as a material that does not contain any fluorine atoms and is substantially insoluble in water or other polar solvents. In one or more embodiments, the non-fluorinated hydrophobic binder is a polymer that includes a styrene monomer in an amount effective to impart a desired amount of hydrophobicity. Exemplary non-fluorinated hydrophobic binders include, without limitation, styrene acrylic polymers, styrene butadiene rubber polymers, styrene-isoprene-styrene (SIS) polymers, styrene-ethylene-butylene-styrene (SEBS) polymers, mixtures and derivates thereof, and the like.

The non-fluorinated water repellent is a polymeric compound as generally described in including a repeating unit derived from a (meth)acrylate ester monomer, wherein the ester moiety has 7 to 40 carbon atoms and more preferably 12 to 24 carbon atoms., which can be linear or branched. Optionally, the non-fluorinated water repellent can further include silicon moieties and/or be admixed with a polyurethane resin compound. The silicon moieties and/or the admixed polyurethane resin compound do not include a fluorine atom. Applicants have discovered that when the non-fluorinated hydrophobic binder is a styrene acrylate copolymer, synergy was observed in terms of performance since the water repellent chemistry is also generally based on acrylates.

In one or more embodiments, the non-fluorinated water repellent is derived from the formula (I):

(I) CH₂=CA¹-C(=O)-OA²,

wherein A¹ represents a hydrogen atom or a methyl group; and A² is a hydrocarbon group having 7 to 40 carbon atoms and more preferably 12 to 24 carbon atoms. The polymeric compound can be made by graft modification of a biobased material with a long-chain hydrocarbon group-containing non-fluorine polymer having a long-chain hydrocarbon group having the 7 to 40 carbon atoms. In one or more embodiments, the water repellent has a biobased carbon content of at least 50% as measured in accordance with ASTM D6866 method B (2022).

The silicon functionality can be a silicone macromer generally defined as a high molecular weight monomer having a silicone as a skeleton. Silicone macromers have radically polymerizable groups at one or both ends and are preferred. Examples of the radically polymerizable groups are (meth) acryloyl group, styryl group, allyl group, vinylbenzyl group, vinyl ether group, vinylalkylsilyl group, vinylketone group and isopropenyl group. (Meth) acryloyl groups, that is, acryloyl groups and methacryloyl groups are preferred. A silicone macromer having a methacryloyl group (that is, a methacryl-modified silicone macromer) is more preferable. A silicone macromer having a methacryloyl group only at one end (a methacryl-modified silicone macromer at one end) is particularly preferable.

In one or more embodiments, the silicone macromer has a formula (II): 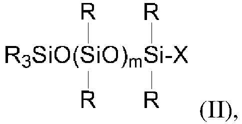 wherein R is the same or different and is a hydrocarbon group having 1 to 12 carbon atoms, X is a group having a radical polymerizable functional group, *m* is a number from 5 to 200. It is preferable that 50 mol% or more of the total R groups are methyl groups. The hydrocarbon group may be substituted. The X group (a group containing a radical polymerizable functional group) is preferably formed by a radical polymerizable functional group and an alkylene group (the alkylene group preferably has 1 to 10 carbon atoms).

The number average molecular weight of the silicone macromer is generally 1,000 to 100,000, for example, 2,000 to 50,000. The number average molecular weight can be measured by gel permeation chromatography (polystyrene conversion).

The silicone macromer can be produced by known methods. As a production method, for example, a living polymer is obtained by anionic polymerization of cyclic siloxane using lithium trialkylsilanolate as an initiator, and a silicone macromer is obtained by reacting γ-methacryloxypropyldimethylmonochloro-silane (as described in Japanese Patent Laid-Open patent application JP S59-78236), or a method of obtaining a silicone macromer as a condensate of a terminal silanol group-containing silicone and an organosilicon compound (as described in Japanese Patent Laid-Open patent application No. S58-167606).

The mixing ratio of the non-fluorine water repellent compound optionally including the silicon functionality as described above with respect to 100 parts by mass of the total amount of the polyurethane resin compound and the non-fluorine water repellent compound is, for example, 0.1 parts by mass or more, preferably 30 parts by mass or more, more preferably 50 parts by mass or more, even more preferably 70 parts by mass or more, particularly preferably 85 parts by mass or more, and for example, 99 parts by mass or less, preferably 96 parts by mass or less, more preferably 90 parts by mass or less.

The mixing ratio of the non-fluorine water repellent compound optionally including the silicon functionality as described above with respect to the water repellent composition is, for example, 15% by mass or more, and for example, 30% by mass or less.

The optional polyurethane resin compound admixed with the non-fluorinated hydrophobic water repellent compound (with optional silicone functionality) can be selected from (A) a first polyurethane resin compound which is a reaction product of a first aliphatic polyisocyanate derivative having an average number of isocyanate groups of 2 or more, a first long-chain active hydrogen compound including a hydrocarbon group having 12 or more and 30 or less carbon atoms and an active hydrogen group in combination, a cationic active hydrogen compound including an active hydrogen group and a cationic group in combination, and an acid compound capable of a salt with the cationic group, and in which the concentration of the hydrocarbon group is 30% or more and 85% or less; (B) a second polyurethane resin compound including a reaction product of an isocyanate compound and at least one kind selected from the group consisting of an alkyl sorbitan having an alkyl group having 12 or more and 30 or less carbon atoms, an alkyl citrate having an alkyl group having 12 or more and 30 or less carbon atoms, and a pentaerythritol ester having an alkyl group having 12 or more and 30 or less carbon atoms; or (C) a third polyurethane resin compound including a reaction product of a second aliphatic polyisocyanate derivative having an average number of isocyanate groups of 2 or more and a second long-chain active hydrogen compound including a hydrocarbon group having 12 or more and 30 or less carbon atoms and an active hydrogen group in combination.

The polyurethane resin compound can be added to the non-fluorinated water repellent compound during polymerization of the monomer used to form the non-fluorinated water repellent compound; blended with the non-fluorine water repellent compound (after polymerization); or the non-fluorine water repellent compound (after polymerization) can be blended into polyurethane resin compound. The resulting composition can further include surfactants and a liquid medium.

Examples of a suitable polymerization method include suspension polymerization and emulsion polymerization, and preferably, from the viewpoint of obtaining an emulsion of the non-fluorine water repellent compound, emulsion polymerization is used.

When the emulsion polymerization is used, first, all or a part of the above-described monomer component, the polyurethane resin compound, the surfactant, and the liquid medium are mixed, thereby preparing a liquid mixture.

The mixing ratio of the surfactant with respect to 100 parts by mass of the total amount of the monomer component is, for example, 1 part by mass or more, preferably 3 parts by mass or more, and for example, 10 parts by mass or less, preferably 5 parts by mass or less.

The mixing ratio of the liquid medium with respect to 100 parts by mass of the total amount of the monomer component is, for example, 100 parts by mass or more, preferably 200 parts by mass or more, and for example, 400 parts by mass or less, preferably 300 parts by mass or less.

Next, the emulsifier is blended into the liquid mixture. Examples of the emulsifier include known emulsifiers, and examples thereof include cationic emulsifiers and anionic emulsifiers. Further, as the emulsifier, a surfactant can be also used. Also, the emulsifier preferably includes a reactive emulsifier. When the emulsifier includes the reactive emulsifier, the non-fluorine water repellent compound (polymer of the above-described monomer component) becomes a polymer including a constituent unit derived from the reactive emulsifier.

When the non-fluorine water repellent compound is the polymer including the constituent unit derived from the reactive emulsifier, the product stability of an aqueous dispersion (water repellent composition) is improved without lowering the water repellency.

The reactive emulsifier is an emulsified dispersant having radical reactivity, that is, an emulsifier having one or more polymerizable unsaturated groups in a molecule and is an emulsifier copolymerizable with the above-described monomer component.

As the reactive emulsifier, for example, a reactive emulsifier of Japanese Unexamined Patent Application No. 2017-25440 is used, and preferably, a reactive emulsifier represented by the following formula (III) is used.

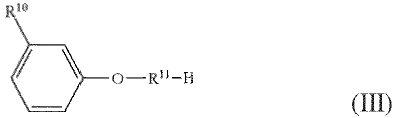

In the above-described formula (III), R¹⁰ represents an organic residue having an ethylenically unsaturated double bond group having 12 or more and 20 or less carbon atoms. R¹¹ represents an oxyalkylene group having 2 or more and 10 or less carbon atoms, and preferably represents an oxyethylene group. When the reactive emulsifier is the reactive emulsifier represented by the above-described formula (III), the product stability of the water dispersion (water repellent composition) is improved without lowering the water repellency.

As the reactive emulsifier represented by the above-described formula (III), preferably, polyoxyethylene alkylphenol is used. These emulsifiers may be used alone or in combination of two or more.

The mixing ratio of the emulsifier with respect to 100 parts by mass of the total amount of the monomer component is, for example, 5 parts by mass or more, and for example, 18 parts by mass or less.

Further, the mixing ratio of the emulsifier with respect to 100 parts by mass of the total amount of the polyurethane resin compound and the non-fluorine water repellent compound is, for example, 8 parts by mass or more, and for example, 20 parts by mass or less.

Further, the mixing ratio of the emulsifier with respect to the water repellent composition is, for example, 0.5% by mass or more, and for example, 5% by mass or less.

Then, after mixing each of the above-described components, the liquid mixture is stirred, and an ultrasonic wave is applied to the liquid mixture, thereby emulsifying the liquid mixture.

As a method for stirring, dispersers such as a homomixer, an ultrasonic homogenizer, a pressurized homogenizer, a milder, and a porous membrane press-fit disperser can be used, and preferably, a homomixer is used.

The stirring conditions are appropriately set, and when the homomixer is used, the number of rotations thereof is set to, for example, 500 rpm or more, and for example, 10,000 rpm or less. The stirring time is, for example, 0.5 minutes or more, and for example, 10 minutes or less, preferably 5 minutes or less. The stirring temperature is, for example, 50° C. or more, and for example, 90° C. or less.

Then, when the above-described liquid mixture is prepared, in a case where a part of the monomer component is blended, the residue of the above-described monomer component is blended into the liquid mixture. Then, a polymerization initiator is blended into the liquid mixture. Examples of the polymerization initiator include azo compounds such as azobisisobutylamidine-dihydrochloride and azobisisobutyronitrile; water-soluble polymerization initiators of persulfates such as potassium persulfate and ammonium persulfate; and oil-soluble polymerization initiators of organic peroxides such as benzoyl peroxide, di-t-butyl peroxide, lauryl peroxide, cumene hydroperoxide, t-butyl peroxypivalate, and diisopropyl peroxydicarbonate. Preferably, an azo compound is used. More preferably, azobisisobutyronitrile is used.

The mixing ratio of the polymerization initiator with respect to 100 parts by mass of the monomer component is, for example, 0.01 parts by mass or more, and for example, 10 parts by mass or less.

Further, if necessary, a chain transfer agent may be blended into the liquid mixture.

Examples of the chain transfer agent include mercaptan group-containing compounds such as lauryl mercaptan, thioglycol, and thioglycerol (particularly, alkyl mercaptan (for example, having 1 or more and 30 or less carbon atoms)), and inorganic salts such as sodium hypophosphite and sodium bisulfite, and preferably, lauryl mercaptan is used.

The mixing ratio of the chain transfer agent with respect to 100 parts by mass of the monomer component is, for example, 0.01 parts by mass or more, and for example, 10 parts by mass or less.

Then, the liquid mixture is heated, thereby polymerizing the monomer component. The heating conditions include a heating temperature of, for example, 40° C. or more, and for example, 80° C. or less, and the heating time of, for example, 1 hour or more, and for example, 6 hours or less.

Thus, an emulsion of the non-fluorine water repellent compound is obtained, and a dispersion liquid of the water repellent composition including the optional polyurethane resin compound, the non-fluorine water repellent compound (emulsion), the surfactant, and the liquid medium is obtained.

The water repellent composition including the non-fluorine water repellent compound and the optional polyurethane resin compound can include a surfactant and a liquid medium from the viewpoint of dispersing the polyurethane resin compound and the non-fluorine water repellent compound. Examples of the surfactant include a nonionic surfactant, an anionic surfactant, and an amphoteric surfactant.

Examples of the nonionic surfactant include polyoxyethylene alkyl ether, polyoxyethylene alkyl phenyl ether, polyoxyethylene fatty acid ester, sorbitan fatty acid ester, polyoxyethylene sorbitan fatty acid ester, polyoxyethylene sorbitol fatty acid ester, glycerin fatty acid ester, polyoxyethylene glycerin fatty acid ester, polyglycerin fatty acid ester, sucrose fatty acid ester, polyoxyethylene alkyl amine, polyoxyethylene fatty acid amide, fatty acid alkylolamide, alkyl alkanolamide, acetylene glycol, oxyethylene adduct of acetylene glycol, and polyethylene glycol polypropylene glycol blocked copolymer. Preferably, a glycerin fatty acid ester is used.

Examples of the cationic surfactant include dodecyl trimethyl ammonium acetate, trimethyl tetradecyl ammonium chloride, hexadecyl trimethyl ammonium bromide, trimethyl octadecyl ammonium chloride, (dodecylmethylbenzyl)trimethyl ammonium chloride, benzyl dodecyl dimethyl ammonium chloride, methyl dodecyl di(hydropolyoxyethylene)ammonium chloride, and benzyl dodecyl di(hydropolyoxyethylene)ammonium chloride.

Examples of the amphoteric surfactant include fatty acid betaine compounds such as alanine compound, imidazolinium betaine compound, amide betaine compound, lauryl betaine, and betaine acetate.

As the surfactant, preferably, a nonionic surfactant is used.

These surfactants may be used alone or in combination of two or more.

The mixing ratio of the surfactant with respect to 100 parts by mass of the total amount of the polyurethane resin compound and the non-fluorine water repellent compound optionally including the silicon functionality as described above is, for example, 10 parts by mass or more, and for example, 40 parts by mass or less.

The mixing ratio of the surfactant with respect to the water repellent composition is, for example, 0.01% by mass or more, and for example, 1% by mass or less.

The liquid medium can include water as an essential component. Also, if necessary, the liquid medium further includes a solvent.

Examples of the solvent include ketones such as acetone, methyl ethyl ketone, and cyclohexanone; nitriles such as acetonitrile; alkyl esters such as methyl acetate, ethyl acetate, butyl acetate, and isobutyl acetate; aliphatic hydrocarbons such as n-hexane, n-heptane, and octane; alicyclic hydrocarbons such as cyclohexane and methyl cyclohexane; aromatic hydrocarbons such as toluene, xylene, and ethylbenzene; alcohols such as ethanol and propylene glycol; and glycol ethers such as dipropylene glycol, dipropylene glycol monomethyl ether, and tripropylene glycol. Preferably, glycol ethers are used.

The mixing ratio of the solvent with respect to the liquid medium is, for example, 5% by mass or more, preferably 15% by mass or more, and for example, 30% by mass or less. These solvents may be used alone or in combination of two or more.

The mixing ratio of the liquid medium with respect to 100 parts by mass of the total amount of the polyurethane resin compound and the non-fluorine water repellent compound optionally including the silicon functionality as described above is, for example, 150 parts by mass or more, and for example, 400 parts by mass or less.

The mixing ratio of the liquid medium with respect to the water repellent composition is, for example, 50% by mass or more, and for example, 80% by mass or less.

Then, the water repellent composition can be, for example, used as a water repellent treatment liquid which is diluted with water (ion-exchanged water). By impregnating such a water repellent treatment liquid with a fiber product, the water repellency can be imparted to the fiber product.

Exemplary non-fluorinated water repellents in accordance with the present disclosure are commercially available from Daiken Industries, Ltd. under the trade names related to the Unidyne XP and XF series. Preferred water repellents include Unidyne XP-8001, XF-5003, XF-5005, and XF-5007.

The non-woven can be produced by a wet laying process . Conventional techniques related to the manufacture of non-wovens and the general structure may or may not be described in detail herein. Moreover, the various tasks and process steps described herein can be incorporated into a more comprehensive procedure or process having additional steps or functionality not described in detail herein. In particular, various steps in the fabrication of the non-wovens for fibrous mat applications and filtration applications as well as the general assembly and materials used therein are well known and so, in the interest of brevity, many conventional steps, structure, and materials, will only be mentioned briefly herein or will be omitted entirely without providing the well-known process details.

The process for forming the non-woven generally includes applying one or more homogenous fiber slurries onto a dewatering screen. The slurries include predetermined amounts of fibers (along with any optional components, such as the natural wood pulp fibers and/or additives) and water that are mixed and dispersed by a pulper or beater evenly in the water to form a slurry batch. Some mechanical work can also be performed on the fibers to affect physical parameters, such as permeability, surface properties and fiber structure.

The slurry batch may thereafter be transferred to a mixing chest where additional water is added and the fibers are homogenously blended. The blended slurry may then be transferred to a machine chest where one or more slurry batches can be combined, allowing for a transfer from a batch to a continuous process. Slurry consistency is defined and maintained by agitation to assure even dispersion of fibers. In this regard, the slurry may optionally be passed through a refiner to adjust physical parameters.

The slurry is then transferred to a moving wire screen (i.e., a dewatering screen) where water is removed by means of gravity and suction. As water is removed, the fibers form into a fibrous nonwoven mat or sheet having characteristics determined by a number of process variables, including for example, the slurry flow rate, machine speed, and drainage parameters. The formed sheet may optionally be compressed while still wet so as to compact the media and/or modify its surface characteristics. In some embodiments, depending on the media being produced, a non-fluorinated acrylate polymer binder that can be sprayed onto the formed sheet at the wet end of the fabrication process. The content of the acrylate polymer generally varies from 0.5 to 4 g/m2.

The wet mat is then moved through a drying section comprised of heated rollers (or "cans" in art parlance) where most of the remaining entrained water is removed. The dried web may then have a binder applied by any conventional means, such as dipping, foulard size-press, spray coating, roller (gravure) application and the like. Heat may then subsequently be applied to dry the web.

In one or more embodiments, the non-fluorinated hydrophobic binder such as styrene acrylate can be applied to top and bottom surfaces of the dried web or alternatively, the dried web can be impregnated with the non-fluorinated hydrophobic binder and the water repellent. For example, the non-fluorinated hydrophobic binder can be first applied to the downstream side, i.e., wire side, and then the upstream side, i.e., felt side, or vice versa. After the non-fluorinated hydrophobic binder is applied, the media is then subjected to impregnation with a solution containing the water repellant. The impregnation solution generally has a concentration of the water repellent of about 4 grams per liter (g/l) to about 12 g/l. As previously discussed, the non-woven treated with the combination of the non-fluorinated hydrophobic binder and the water repellent advantageously provides the media with the desired amount of hydrophobic properties without deleteriously affecting porosity and other properties of the resulting media compared to a similar PFAS treated media.

In one or more embodiments, the non-woven can be treated with formulations including the non-fluorinated water repellent at less than 5% by weight based on the total basis weight of the particular media, which provides the desired amount of hydrophobicity and is much more cost effective than prior media.

Regarding the non-fluorinated hydrophobic binder, depending on the media being formed, e.g., non-woven fibrous mat media or non-woven filtration media, the non-fluorinated hydrophobic binder is generally less than 35% by weight of the total weight of the non-woven. In one or more other embodiments, the non-fluorinated hydrophobic binder is generally less than 25% by weight of the total weight of the non-woven; and in still one or more other embodiments, the non-fluorinated hydrophobic binder is generally less than 15% by weight of the total weight of the non-woven.

Advantageously, relative to prior art organofluorine-treated media, the treatment of the non-woven with the non-fluorinated hydrophobic binder and the non-fluorinated water repellent including the acrylate copolymer and optional polyurethane and/or silicone functional groups does not degrade performance. Similar mechanical strength, water repellency, minimal changes to porosity, where applicable, glue repellency, and like properties have observed for the different types of media.

In one or more embodiments, the resulting non-woven can have a basis weight of about 50 to about 250 g/m². In other embodiments, the basis weight of the media is greater than 100 grams per square meter (g/m²) to about 200 g/m².

Additionally, the resulting non-woven is provided with a hydrophobicity as defined by a hydrostatic head pressure (also referred to as "hydrohead", "hydrostatic head" or generally "hydrostatic pressure" which can be measured according to EDANA NWSP 80.6 (23)) of greater than or equal to 25 millibar (mbar). The hydrostatic head pressure test generally includes measuring water pressure of a column of water in direct contact with one side of the media, wherein the water pressure is incrementally increased until such time that water droplets form on the other side of the media. The hydrostatic head pressure of the column is recorded when the water droplets are formed.

Hydrohead generally refers to a measurement used to calculate how much water pressure a "waterproof' material can take before it leaks.

Glue repellency can be determined by measuring the contact angle with a polyurethane based glue such as STOBICOLL F466.16 LV glue, which is a polyurethane-based glue containing 81wt% polyol and 19wt% isocyanate. The non-woven of the present invention preferably has a contact angle with the polyurethane based glue of at least 50 degrees.

### Filter media applications

The non-woven can be configured as media for filtration (i.e. a filter media/filtration media), such as e.g. air filtration.

If employed as a filtration media, e.g. a pleated filtration media the dried web may advantageously be subjected to machine-direction (longitudinal) grooving using mated male/female rollers. If employed, the media may have about 50 longitudinally extending grooves per 200 mm of media width. Each groove will thus preferably have a nominal width of about 4 mm. A typical grooved glass-containing high-efficiency fuel grade has dimensions such as overall SD (saturated and dried, but not cured) caliper of about 38 mils, SD groove depth of about 13 mils, and SD optical caliper A (optical measurement of media thickness in one groove, therefore representing corresponding flat thickness) of about 28 mils.

The finished media may then be taken up on a roll for further processing into finished products. For example, one or more finished filtration media sheets may be laminated with one or more other sheets of material (e.g., at least one additional filtration media layer, supporting layer and the like) to achieve desired physical and performance characteristics. The filtration media may also be pleated and formed into a cylindrical filter cartridge that may then be provided as a component part of a filtration unit (e.g., an on-board fuel filter unit). Co-pleating of the filtration media with a supporting wire mesh layer may be desirable in certain end use applications.

If configured as a filter media, the non-woven may comprise one or more layers, such as e.g. one, two or three layers (typically not more than three).

The filter media may be substantially composed of cellulose and is preferably a single layer product.

The filter media may be substantially composed of glass fibers and is preferably a single layer product.

The filter media may comprise three layers, wherein at least one of the outer layers comprise at least50 wt% synthetic fibers, more preferably at least 80 wt% synthetic fibers, based on the total weight of non-woven.

The filter media may have a basis weight between 30 and 160 g/m².

The filter media may have a thickness of between 200 and 600 µm, measured in accordance with ISO 9073-2:1997.

A dry tensile strength in machine direction (MD) preferably is in between 300 and 4000 N/m, measured in accordance with ISO 9073-4:2021.

A dry tensile strength in cross direction (CD) of between 150 and 2000 N/m, measured in accordance with ISO 9073-4:2021.

Generally, a filtration media (especially a filtration media including an acrylate copolymer including silicone and polyurethane groups) in accordance with present disclosure can provide effective hydrophobicity as defined by a hydrostatic head (also referred to as hydrohead) of greater than or equal to 25 mbar. In one or more embodiments, the measured hydrohead is greater than 50 mbar, and in still other embodiments, the measured hydrohead is greater than 60 mbar. If configured as a filter media, the non-woven preferably has a relatively high air permeability. The air permeability of the media is measured according to TAPPI Standard T 251 cm-85 ("Air Permeability of Porous Paper, Fabric and Pulp Handsheets") with 0.5 inch (12.7 mm) water differential, which measures the rate of the flow of air in cubic feet per square foot of sample area per minute. Air permeability may also be referred to as porosity. In one or more embodiments, the filtration media has an air permeability between 50 and 1500 l/m²/s at 200Pa, preferably of at least 100 liter per square meter second (l/m²/s).

### Fibrous mat applications

In another specific embodiment, the non-woven may be configured as fibrous (non-woven) mat which e.g. may comprise two layers. This fibrous mat may be used for gypsum board applications as described above.

For fibrous mat applications such as is utilized for covering a gypsum core intended for use in wet environments, the fibrous mat can be impregnated with the non-fluorinated hydrophobic binder and the water repellent and applied to opposing surfaces of the gypsum core to provide the desired structural rigidity and the desired hydrophobicity.

The first layer of such a fibrous mat may comprise from 25 to 60 wt % of cellulose fibers, from 25 to 60 wt % of glass fibers, and from 0 to 30 wt % of synthetic fibers based on total weight of fibers. The second layer may substantially (more than 90% or even more than 95%) be made of cellulose fibers.

The first layer may have a basis weight between 30 to 150 g/m² and the second layer between 10 to 80 g/m².

The fibrous mat may have a basis weight of between 80 to 250 g/m² preferably 100 to 200 g/m² including the nonfluorinated hydrophobic binder, the nonfluorinated water repellent and - if needed - additives such as pigments, fillers, antifungal additive.

The thickness of the mat may be between 200 to 500 µm preferably between 250 to 450 µm, measured in accordance with ISO 9073-2:1997.

The air permeability of the fibrous mat may be between 10 and 1000 l/m²/s at 196Pa.

A dry tensile strength in MD of at least 6000 N/m preferably between 8000 and 15000 N/m.

A dry tensile strength in CD of at least 2000 N/m preferably between 3000 and 8000 N/m.

A wet tensile strength in MD of at least 2000 N/m preferably between 3000 and 8000 N/m.

A wet tensile strength in CD of at least 1000 N/m preferably between 1500 and 4000 N/m.

The tensile strength values again are determined in accordance with ISO 9073-4:2021.

The fibrous mat media as treated preferably has a Cobb value less than 12 g/m² after a period of 60 seconds and/or 30 g/m² after a period of 2 hours as measured in accordance with ISO 535:2014.

The present invention will be further illustrated by the following non-limiting examples thereof.

### EXAMPLE 1

In this example, a non-woven defined by a two-layer fibrous mat was wet laid onto a screen, dewatered, dried, and impregnated with different water repellents. The two-layer fibrous mat included a bottom layer formed from softwood pulp fibers (46 wt%), glass fibers (41 wt%, diameter: 23 µm, length: 13 mm), and polyethylene terephthalate (13 wt%, 1.7 dtx, length: 6 mm) at a basis weight of 74.6 g/m² and a top layer formed of softwood pulp fibers (50 wt%) and hardwood fibers (50 wt%) at basis weight of 26.7 g/m².

The various non-wovens were treated with a non-fluorinated hydrophobic binder of styrene acrylate and different water repellents. The different water repellents included Daikin XP 8001, which is an acrylate polymer in accordance with the present disclosure (Inventive Example 1), a biobased wax commercially available under the trade name Ecoperl 4 (CHT) (Comparative Example 1.1), a C-6 fluorocarbon (Comparative Example 1.2), and a biobased wax commercially available under the trade name Synthro Wax NC 406 D; (Comparative Example 1.3 ).

The non-woven was treated with the various water repellents and hydrophobic binder by impregnation in an aqueous based solution at a water repellent: binder ratio of 1-2:98-99 (wt./wt. on dry basis). The impregnation solution contained other additives useful for the application (pigments, antifoam, clay mineral and biocide). For each non-woven, impregnation the binder and water repellent represented 30 wt% of total weight of the non-woven.

Table 1 provide Cobb values measured in accordance with ISO 535:2014 after 2 hours, which is an indication of hydrophobicity.

**Table 1.**

| | Comparative Example 1.1 | Comparative Example 1.2 | Comparative Example 1.3 | Inventive Example 1 |
|---|---|---|---|---|
| Water Repellent | Ecoperl 4 (CHT)-biobased functionalized ionic polymer/wax | Nuv N2155-C-6 fluorocarbon | Synthro Wax NC406D-Carnauba type 3 wax nonionic emulsion | Daikin XP-8001-Non-fluorinated Acrylate Copolymer |
| Dry-end Hydrophobic Binder | Styrene acrylate | Styrene acrylate | Styrene acrylate | Styrene acrylate |
| Cobb (top 2 h (g/m²) | 134 | 22 | 138 | 25.6 |

As shown, the inventive non-woven exhibited a Cobb water absorption value comparable to the C-6 fluorocarbon chemistry, which is indicative of excellent hydrophobicity. In contrast, other non-fluorinated water repellents such as the biobased wax and the Ecoperl 4 resulted in markedly poor performance.

### Example 2.

In this example, a comparison was made between machine produced non-wovens in form of filter media made by a wet-laid process including 3 layers with a water repellent in accordance with the present disclosure and commercially available water repellents including fluoropolymers and waxes. The top and bottom non-woven layers were identical and included 24 gsm 41% 1.5 µm/6mm PET, 49% 0.5 µm/5mm PET, 10% bicomponent PET whereas the middle layer had a different composition. The middle layer included 24 gsm PET (28% 0.5µm/5mm PET, 49% 1.5µm/6mm PET, 23% bicomponent PET) + 15 gsm Microglass.

The filter media was made on a paper machine with two headboxes, the first headbox supplied the same fiber mix for the top and bottom layers and the second headbox supplied a different fiber mix for the middle layer. The bottom fiber mix was supplied onto a dewatering screen to form the bottom layer on the screen. Subsequently, the middle fiber mix was supplied onto the bottom layer followed by the top fiber mix (same as bottom layer) supplied onto the middle layer to form the top layer.

Table 2 provides a summary of the filter media and testing results. The wet-end and dry-end binders were added at 3.5 g/m² each.

**Table 2.**

| | Wet End Binder | Dry End Binder | Water Repellent | Solution dry content of water repellent | Hydrohead (mbar) | Mason Jar (min) | Efficiency TSI (%)* | TSI Pressure Drop (Pa)* |
|---|---|---|---|---|---|---|---|---|
| C2-1 | CHP628 (Styrene Acrylate) | CHP628 (Styrene Acrylate) | Archoma Solusoft Fe (Silicone) | 4 | 8.2 | 0 | 63.56 | 58 |
| C2-2 | CHP628 (Styrene Acrylate) | CHP628 (Styrene Acrylate) | Fluorolink P54 (C2-fluoropolymer-perfluorether) | 4 | 9.2 | 0 | 69.93 | 68 |
| C2-3 | CHP628 (Styrene Acrylate) | CHP628 (Styrene Acrylate) | Evoral NFP (paraffin wax) | 8 | 19 | 0 | 58.89 | 55 |
| C2-4 | CHP628 (Styrene Acrylate) | CHP628 (Styrene Acrylate) | Evoral NFP (paraffin wax) Fluorolink P54 (C2-fluoropolymer-perfluorether) | 6+4 | 12.1 | 1 | 65.5 | 58 |
| 12-1 | CHP688 (Acrylate) | CHP628 (Styrene Acrylate) | Unidyne XF-5003 (Inventive Water Repellent) | 8 | 43 | 90 | 61.07 | 59 |
| 12-2 | CHP628 (Styrene Acrylate) | CHP628 (Styrene Acrylate) | Unidyne XF-5005 (Inventive Water Repellent) | 8 | 54.8 | 90 | 57.41 | 71 |
| 12-3 | CHP628 (Styrene Acrylate) | CHP628 (Styrene Acrylate) | Unidyne XF-5007 (Inventive Water Repellent) | 4 | 55.3 | 90 | 60.78 | 53 |

| | | | | | | | | |
|---|---|---|---|---|---|---|---|---|
| I-inventive; C-comparative * Values were obtained on a TSI tester using DEHS aerosol of 0.4µm and a flow rate of 5.3 cm/s using a TSI Incorporated Automated Filter Tester (Model 8130). The test sample was 100 cm². | | | | | | | | |

The hydrostatic pressure is a dynamic measurement of material resistance to water under pressure until water bubbles pass through the filter media. It is expressed in mbar or in mm of water column and the test method is framed by the following standard: EDANA NWSP 80.6 (23). A filter media is considered to have a good hydrophobicity level when the hydrostatic pressure is above 30 mbar or 300 mm of water column.

The Mason Jar test measures the time a given media can keep a static pressure of 15 cm high water column (containing 0.9% NaCl) and a filter media is considered to have high hydrophobicity when it can stand the pressure during 90 min. The standard used for the Mason Jar test is EDANA NWSP 080.11.R0 (20)

As demonstrated above, the filter media including the non-fluorinated hydrophobic binder applied at the dry end and the non-fluorinated water repellent applied via impregnation as provided in Inventive Examples I2.1-I2.3 exhibited a hydrohead pressure greater than 40 mbar and a Mason Jar time of 90 minutes, which is indicative of excellent hydrophobicity. In contrast, the filter media impregnated with other types of water repellents exhibited relatively poor results for the hydrostatic pressure and the Mason Jar tests.

### Example 3.

In this example, a comparison was made between machine produced non-wovens as filter media having 3 layers made by a wet-laid process with a water repellent in accordance with the present disclosure and different binders.

The top and bottom non-woven layers were identical and included 12 gsm 24 % 1.5 µm/6mm PET, 66% 0.5 µm/5mm PET, 10% bicomponent PET and the middle layer included 10 gsm PET (16% 0.5µm/5mm PET, 84% bicomponent PET) + 15gsm Microglass.

The filter media was made in accordance with Example 2, wherein the wet-end and dry-end binders are 1 g/m² and 2.5 g/m², respectively.

Table 3 provides a summary of the different media and testing results.

**Table 3.**

| | Wet End Binder | Dry End Binder | Water Repellen t | Solutio n dry content of the water repellen t (g/L) | Hydrohea d (mbar) | Maso n Jar (min) | Efficiency TSI (%)* | TSI Pressure Drop (Pa)* |
|---|---|---|---|---|---|---|---|---|
| C3-1 | CHP68 8 (Acrylate) | CHP68 8 (Acrylate) | Unidyne XF-5007 (Inventive Water Repellent) | 8 | 33.0 | 15 | 58.00 | 50 |
| C3-2 | CHP68 8 (Acrylate) | CHP68 8 (Acrylate) | Unidyne XF-5007 (Inventive Water Repellent) | 10 | 38.2 | 10 | 65.56 | 75 |
| 13-1 | CHP62 8 (Styrene Acrylate) | CHP62 8 (Styrene Acrylate) | Unidyne XF-5007 (Inventive Water Repellent) | 8 | 60.7 | 90 | 66.73 | 57 |
| 13-2 | CHP68 8 (Acrylate) | CHP62 8 (Styrene Acrylate) | Unidyne XF-5007 (Inventive Water Repellent) | 8 | 49.1 | 90 | 68.24 | 72 |
| 13-3 | CHP62 8 (Styrene Acrylate) | CHP62 8 (Styrene Acrylate) | Unidyne XF-5007 (Inventive Water Repellent) | 10 | 48.8 | 90 | 66.94 | 73 |

| | | | | | | | | |
|---|---|---|---|---|---|---|---|---|
| I=inventive, C=comparative * Values were obtained on a TSI tester using DEHS aerosol of 0.4µm and a flow rate of 5.3 cm/s using a TSI Incorporated Automated Filter Tester (Model 8130). The test sample was 100 cm². | | | | | | | | |

As shown above, the hydrophobic binder in combination with the water repellent in accordance with the present disclosure resulted in excellent hydrophobicity. Replacing the hydrophobic binder with a hydrophilic binder as shown in C3-1 to C3-2 significantly reduced hydrophobicity.

### Example 4.

In this example, contact angles were measured for untreated filter media, the same filter media treated with the combination for the hydrophobic binder and the non-fluorinated water repellent in according with the present disclosure; and the same filter media treated with C6 fluorinated compound. The contact angles were measured using a droplet of STOBICOLL F466.16 LV glue, which is a polyurethane-based glue containing 81wt% polyol and 19wt% isocyanate.

The results are provided in Table 4 below.

**Table 4**

| | Contact angle (°) | Contact angle with substrate | Spreadability on substrate |
|---|---|---|---|
| Base media (untreated) | 11.7 | low | yes |
| 12-2 | 60.4 | high | no |
| C 2-2 | 69.9 | high | no |

As shown, the untreated filter media exhibited a relatively low contact angle and spreadability of the droplet was readily observed. In contrast, the filter media treated with the inventive non-fluorinated hydrophobic binder and the non-fluorinated water repellent exhibited similar behaviour as the organofluorine treated filter media.

While embodiments of the invention have been described with reference to exemplary embodiments, it will be understood by those skilled in the art that various changes can be made and equivalents can be substituted for elements thereof without departing from the scope of the embodiments of the invention. In addition, many modifications can be made to adapt a particular situation or material to the teachings of embodiments of the invention without departing from the essential scope thereof. Therefore, it is intended that the embodiments of the invention not be limited to the particular embodiment disclosed as the best mode contemplated for carrying out this invention, but that the embodiments of the invention will include all embodiments falling within the scope of the appended claims. Moreover, the use of the terms first, second, etc. do not denote any order or importance, but rather the terms first, second, etc. are used to distinguish one element from another. Furthermore, the use of the terms a, an, etc. do not denote a limitation of quantity, but rather denote the presence of at least one of the referenced item.

## Claims

1. A non-woven comprising
at least one treated fiber layer;
a non-fluorinated hydrophobic binder comprising a polymer containing at least a styrene moiety; and
a non-fluorinated water repellant comprising a polymer with a repeating unit derived from (meth)acrylate ester monomer, wherein the ester moiety has 7 to 40 and more preferably 12 to 24 carbon atoms.

2. The non-woven of claim 1, wherein the at least one treated fiber layer comprises at least one of synthetic fibers, and glass fibers.

3. The non-woven of claim 1, wherein the at least one treated fiber layer comprises cellulose fibers.

4. The non-woven of any one of the preceding claims, wherein the non-fluorinated water repellant has a biobased carbon content of at least 50% as measured in accordance with ASTM D6866:2022 method B.

5. The non-woven of any one of the preceding claims, wherein the polymer of the non-fluorinated water repellant is obtained by graft modification of a biobased material with a long-chain hydrocarbon group-containing non-fluorine polymer having a long-chain hydrocarbon group having 7 to 40 carbon atoms.

6. The non-woven of any one of the preceding claims, wherein the polymer of the non-fluorinated water repellant is derived from formula (I):
(II) CH₂=CA¹-C(=O)-OA²,
wherein A¹ represents a hydrogen atom or a methyl group; and A² is a hydrocarbon group having 7 to 40 carbon atoms and more preferably 12 to 24 carbon atoms.

7. The non-woven of any one of the preceding claims, wherein the non-fluorinated water repellant further contains silicon functionalities and/or is admixed with a polyurethane resin compound.

8. The non-woven of any one of the preceding claims, wherein the silicon functionality is a silicone macromer has a formula (II): 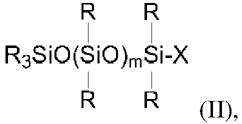 wherein R is the same or different and is a hydrocarbon group having 1 to 12 carbon atoms, X is a group having a radical polymerizable functional group, m is a number from 5 to 200.

9. The nonwoven according to any one of the preceding claims, wherein the non-woven is a fibrous mat and has a Cobb value less than 12 grams per square meter after 60 seconds as measured in accordance with ISO 535:2014.

10. The non-woven of any of the preceding claims, wherein the non-woven is a filtration media having a hydrostatic head pressure of at least 30 mbar and a mason jar holdout of 90 minutes.

11. The non-woven of claim 10, wherein the non-woven has a contact angle with a polyurethane based glue of at least 50 degrees.

12. The non-woven in accordance with any one of the preceding claims further comprising a second non-fluorinated binder having a hydrophobicity less than the non-fluorinated hydrophobic binder.

13. The non-woven of claim 12, wherein the second non-fluorinated binder comprises an acrylate polymer and the non-fluorinated binder comprises a styrene-acrylate copolymer.

14. The non-woven of claims 12 and 13, wherein the second non-fluorinated binder and the non-fluorinated hydrophobic binder are in less than 35 % by weight, preferably less than 25%, and most preferably less than 15 % by weight of a total weight of the non-woven.

15. The non-woven of any of the preceding claims, wherein the non-fluorinated hydrophobic binder is in an amount of at least 40 % based on a total amount of the binder.

16. The non-woven of any of the preceding claims, wherein the non-woven is a fibrous mat and the at least one fiber layer comprises two layers.

17. The non-woven of any of the preceding claims, wherein the non-woven is configured as filtration media and the at least one fiber layer comprises three layers comprising first and second fiber layers form a first blended area of fibers therebetween and the second and third fiber layers form a second blended fiber area of fibers therebetween, and wherein average fiber diameters in the first and third fiber layers are larger than an average fiber diameter of the second fiber layer.

18. A process for fabricating non-woven, the process comprising
subsequent to dewatering a homogenous fiber slurry and drying to form a multilayered fibrous substrate, applying a non-fluorinated hydrophobic binder to the substrate at a dry end followed by impregnating the substrate with a non-fluorinated water repellent to form the non-woven, or
subsequent to dewatering a homogenous fiber slurry and drying to form a fibrous substrate, applying to the substrate and impregnating the substrate with a non-fluorinated hydrophobic binder and a non-fluorinated water repellent to form the non-woven,
wherein the non-fluorinated hydrophobic binder comprises a polymer containing at least a styrene moiety, and
wherein the non-fluorinated water repellent comprises a polymer with a repeating unit derived from (meth)acrylate ester monomer, wherein the ester moiety has 7 to 40 carbon atoms, and more preferably 12 to 24 carbon atoms.

19. The process of claim 18, wherein the non-fluorinated water repellent polymer is less than 5% of a total weight of the non-woven.

20. The process of any one of claims 18 to 19, wherein the non-fluorinated water repellant further contains silicon functionalities and/or is admixed with a polyurethane resin compound.

21. Use of the non-woven of claim 1 in a fibrous mat application or a filtration application.
